# EUROPÄISCHE PATENTSCHRIFT

(11) **EP 2 064 019 B1**
(45) Veröffentlichungstag und Bekanntmachung des Hinweises auf die Patenterteilung: **11.11.2015**
(21) Anmeldenummer: 07800183.1
(22) Anmeldetag: 14.09.2007
(51) Int. Cl.: B23K 10/00, H05H 1/36

(54) **WASSERDAMPFPLASMABRENNER**
WATER VAPOUR PLASMA BURNER
TORCHE À PLASMA À VAPEUR D'EAU

(30) Priorität: 15.09.2006 AT 15462006
(43) Veröffentlichungstag der Anmeldung: 03.06.2009
(73) Patentinhaber: Fronius International GmbH, 4643 Pettenbach (AT)
(72) Erfinder: MITTERHUMER, Walter, 4643 Pettenbach (AT); PAUSER, Heribert, 3484 Grafenwörth (AT)
(74) Vertreter: Sonn & Partner Patentanwälte
(86) Internationale Anmeldenummer: PCT/AT2007/000438
(87) Internationale Veröffentlichungsnummer: WO 2008/031132

(56) Entgegenhaltungen:
- EP-A- 0 902 606
- EP-A- 1 686 843
- EP-A1- 0 640 426
- EP-A2- 0 289 961
- WO-A-99/38365
- WO-A-2005/110659
- DE-A1- 19 756 445
- JP-A- 62 127 173
- JP-A- H06 254 684
- US-A- 5 717 187
- US-A- 5 756 960

## Beschreibung

Die Erfindung betrifft einen Wasserdampfplasmabrenner zum Schneiden eines Werkstücks, mit einer Zuleitung für eine Flüssigkeit, einer Heizeinrichtung und einem Verdampfer zur Bildung eines Gases aus der Flüssigkeit, einer lösbar mit einer beweglich gelagerten Kolbenstange verbundenen Kathode, und einer Düse mit einer Austrittsöffnung für das Gas.

Aus dem Stand der Technik, insbesondere der EP 1 522 371 A1, ist bekannt, dass in einem Plasmabrenner eine Vielzahl von Sensoren angeordnet werden kann, welche beispielsweise die Temperatur oder die Spannung erfasst. Dabei sind die einzelnen Sensoren mit einem Prozessor im Plasmabrenner verbunden, welcher wiederum über eine Datenleitung mit dem Prozessor in der Stromquelle verbunden ist. Somit kann der Schneidprozess aufgrund der von den Sensoren gelieferten Messwerte geregelt werden.

Nachteilig ist hierbei, dass mit jedem im Plasmabrenner eingebauten Sensor sowie mit der Integration des Prozessors und der damit verbundenen Elektronik die Baugröße des Plasmabrenners steigt. Dadurch wird die Handhabung des Plasmabrenners zumindest teilweise verschlechtert. Ebenso wird durch den Einsatz von empfindlicher Elektronik im Plasmabrenner die Gefahr von Störungen erhöht. Des Weiteren ist aus der EP 1 522 371 A1 keine technische Lösung zur Verschleißerkennung beschrieben.

Des Weiteren ist aus dem Stand der Technik bekannt, dass in einem Brenner eines Wasserdampf-Schneidgerätes die Temperatur eines Verdampfers, welcher eine Flüssigkeit verdampft, geregelt wird.

Die WO 2005/110659 A und die WO 99/38365 A betreffen einen Wasserdampfplasmabrenner der gegenständlichen Art mit einer Zuleitung für eine Flüssigkeit einer Heizeinrichtung und einem Verdampfer zur Bildung eines Gases aus der Flüssigkeit und einer Düse mit einer Austrittsöffnung für das Gas.

Nachteilig ist hierbei, dass die über den Lichtbogen in eine Kathode eingebrachte Wärme die Temperaturregelung des Verdampfers auf unvorhersehbare Weise beeinflussen kann, da die von der Kathode eingebrachte Wärme bei der Temperaturregelung des Verdampfers nicht berücksichtigt wird. Dadurch kann der Brenner gegebenenfalls überhitzen und zerstört werden.

Die JP H06254684 A betrifft einen Wasserdampfplasmabrenner bei dem eine Verschleißerkennung über die Messung der Durchflußmenge oder des Druckes des Gases erfolgt.

Die Aufgabe der Erfindung besteht in der Schaffung eines Wasserdampfplasmabrenners, mit dem eine automatische Verschleißerkennung, insbesondere einer Kathode und einer Anode, sowie eine Verbesserung der Prozessregelung, insbesondere die Regelung zum Verdampfen des flüssigen Betriebsmediums, durchführbar ist.

Die Aufgabe der Erfindung wird dadurch gelöst, dass in der Kolbenstange zumindest ein Temperatursensor angeordnet ist, wobei der zumindest eine Temperatursensor mit einer Steuervorrichtung verbindbar ist, sodass über die erfassten Temperaturwerte auf einen Verschleiß der Kathode und der Düse rückschließbar ist und die Regelung eines Wasserdampfplasmaschneidprozesses beeinflussbar ist. Aufgrund der von zumindest einem in der Kolbenstange angeordneten Temperatursensor erfassten Temperatur können die Veränderungen der Temperatur von der Steuervorrichtung ausgewertet werden und aufgrund der Temperaturveränderung auf den Verschleiß der Kathode des Wasserdampfplasmabrenners rückgeschlossen werden.

Wichtig dabei ist, dass durch den zumindest einen Temperatursensor die Funktion des Wasserdampfplasmabrenners nicht beeinträchtigt wird. Ebenso wird durch die Integration des Temperatursensors die Baugröße des Wasserdampfplasmabrenners nicht erhöht und somit die Handhabung nicht negativ beeinflusst wird. Durch die Verschleißerkennung ist der Steuervorrichtung im Wesentlichen ständig der Zustand der Verschleißteile, also Kathode und Düse, bekannt, wodurch die Verschleißteile bis zum vollständigen Verbrauch eingesetzt werden können. Dabei ist selbstverständlich eine gleichbleibende Qualität des Schneidprozesses gewährleistet. Dem Benutzer des Wasserdampfplasmabrenners kann der Verschleiß entsprechend angezeigt werden, sodass ein Wechsel der verschlissenen Teile rechtzeitig erkannt wird. Dadurch wird die Gefahr der Zerstörung des Wasserdampfplasmabrenners, beispielsweise durch Überhitzung, wesentlich minimiert und somit die Haltbarkeit des Brenners wesentlich verlängert. Durch die frühzeitige Verschleißerkennung wird auch in vorteilhafter Weise erreicht, dass die Stabilität bzw. die Qualität des Schneidprozesses nicht beeinträchtigt wird.

Durch die Temperaturerfassung der Kolbenstange kann der Wärmehaushalt im Wasserdampfplasmabrenner wesentlich besser und wesentlich schneller geregelt werden, sodass das flüssige Betriebsmedium lediglich mit der minimal erforderlichen Heizleistung vollständig verdampft wird. Somit kann eine Überhitzung des Wasserdampfplasmabrenners im Wesentlichen ausgeschlossen werden, wodurch die Haltbarkeit des Brenners erheblich verlängert wird. Dementsprechend wird durch den erfindungsgemäßen Temperatursensor die Temperatur des Brenners überwacht, sodass bei Erreichen eines gewissen Temperaturgrenzwertes der Schneidvorgang durch die Steuervorrichtung unterbrochen werden kann.

Wird der Temperatursensor durch einen Halbleiterwiderstand, insbesondere einen PTC(Positive Temperature Coefficient)-Widerstand oder einen NTC(Negative Temperature Coefficient)-Widerstand, ein Thermoelement oder dergleichen gebildet und ist der Temperatursensor im Wesentlichen parallel zur Längsachse der Kolbenstange, vorzugsweise im Randbereich der Kolbenstange angeordnet, stabförmig ausgebildet und mit Anschlüssen versehen, wird eine exakte Erfassung der Temperatur der Kolbenstange gewährleistet.

In der Kolbenstange kann eine Ausnehmung für den Temperatursensor vorgesehen sein, die vorzugsweise korrespondierend zum Temperatursensor ausgebildet ist. Der Temperatursensor kann in die Ausnehmung eingeklemmt werden. Dadurch wird in vorteilhafter Weise erreicht, dass die Funktion der Kolbenstange, insbesondere deren Bewegung, nicht eingeschränkt ist.

Die Anschlüsse des Temperatursensors sind vorzugsweise mit der Steuervorrichtung verbunden, wodurch der Wärmehaushalt des Wasserdampfplasmabrenners exakt geregelt werden kann.

Von Vorteil ist auch die Maßnahme nach Anspruch 2, da dadurch ein stabiler Lichtbogen für den Schneidprozess gewährleistet ist.

Durch die Maßnahme gemäß Anspruch 3 wird in vorteilhafter Weise erreicht, dass dem Benutzer visuell dargestellt wird, wann die Verschleißteile zu wechseln sind.

Die vorliegende Erfindung wird anhand der beigefügten, schematischen Zeichnungen näher erläutert. Darin zeigen:
- Fig. 1: eine exemplarische Darstellung eines Wasserdampf-Schneidgerätes;
- Fig. 2: ein Schnittbild durch eine Ausführungsform eines Wasserdampfplasmabrenners;
- Fig. 3: ein Schnittbild durch einen Wasserdampfplasmabrenner mit einem erfindungsgemäßen Temperatursensor in der Kolbenstange;und
- Fig. 4: ein Beispiel des zeitlichen Temperaturverlaufs an der Kolbenstange zur Erfassung des Verschleißes der Kathode aus der Temperaturveränderung nach Abschluss eines Schweißprozesses.

Einführend wird festgehalten, dass gleiche Teile des Ausführungsbeispiels mit gleichen Bezugszeichen versehen werden.

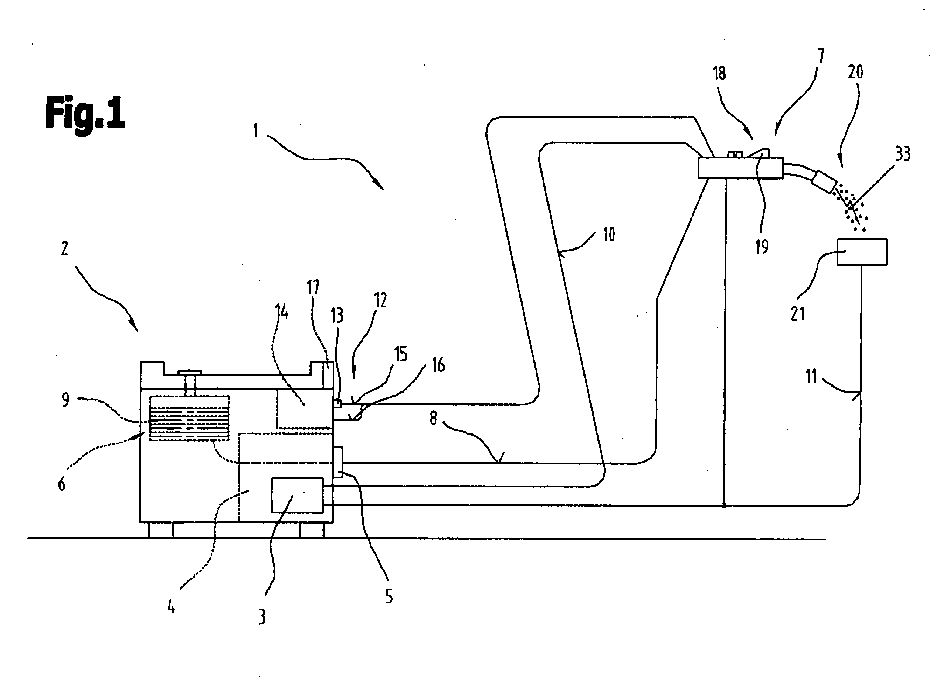

Fig. 1 zeigt ein Wasserdampf-Schneidgerät 1 mit einem Grundgerät 2 für ein Wasserdampf-Schneidverfahren. Das Grundgerät 2 umfasst eine Stromquelle 3, eine Steuervorrichtung 4 und ein der Steuervorrichtung 4 zugeordnetes Sperrelement 5. Das Sperrelement 5 ist mit einem Behälter 6 und einem Wasserdampfplasmabrenner 7 über eine Versorgungsleitung 8 verbunden, sodass der Wasserdampfplasmabrenner 7 mit einem im Behälter 6 angeordnetem flüssigen Medium bzw. einer Flüssigkeit 9, versorgt werden kann. Die Versorgung des Wasserdampfplasmabrenners 7 mit elektrischer Energie erfolgt über Leitungen 10, 11, welche mit der Stromquelle 3 verbunden sind.

Zum Kühlen des Wasserdampfplasmabrenners 7 ist dieser über einen Kühlkreislauf 12 allenfalls unter Zwischenschaltung eines Strömungswächters 13 mit einem Flüssigkeitsbehälter 14 verbunden. Bei der Inbetriebnahme des Brenners 7 bzw. des Wasserdampf-Schneidgerätes 1 kann der Kühlkreislauf 12 von der Steuervorrichtung 4 gestartet und somit eine Kühlung des Brenners 7 über den Kühlkreislauf 12 erreicht werden. Zur Bildung des Kühlkreislaufs 12 wird der Brenner 7 über Kühlleitungen 15, 16 mit dem Flüssigkeitsbehälter 14 verbunden.

Weiters kann das Wässerdampf-Schneidgerät 1 eine Eingabe- und/oder Anzeigevorrichtung 17 aufweisen, über welche die unterschiedlichsten Parameter bzw. Betriebsarten des Wasserdampf-Schneidgerätes 1 eingestellt und angezeigt werden können. Die über die Eingabe- und/oder Anzeigevorrichtung 17 eingestellten Parameter werden an die Steuervorrichtung 4 weitergeleitet, welche die einzelnen Komponenten des Wasserdampf-Schneidgerätes 1 entsprechend ansteuert.

Weiters kann der Wasserdampfplasmabrenner 7 zumindest ein Bedienungselement 18, insbesondere einen Taster 19, aufweisen. Über das Bedienungselement 18, insbesondere den Taster 19, kann der Benutzer durch Aktivieren und/oder Deaktivieren des Tasters 19 der Steuervorrichtung 4 vom Brenner 7 aus mitteilen, dass ein Wasserdampf-Schneidverfahren gestartet bzw. durchgeführt werden soll. Des Weiteren können an der Eingabe- und/oder Anzeigevorrichtung 17 beispielsweise Voreinstellungen getroffen werden, insbesondere das zu schneidende Material, die verwendete Flüssigkeit und beispielsweise Kennlinien des Stromes und der Spannung vordefiniert werden. Selbstverständlich können weitere Bedienelemente am Brenner 7 angeordnet sein, über die ein oder mehrere Betriebsparameter des Wasserdampf-Schneidgerätes 1 vom Brenner 7 aus eingestellt werden. Hierzu können diese Bedienelemente direkt über Leitungen oder über ein Bussystem mit dem Wasserdampf-Schneidgerät 1, insbesondere dessen Steuervorrichtung 4, verbunden sein.

Die Steuervorrichtung 4 aktiviert nach dem Betätigen des Tasters 19 die einzelnen für das Wasserdampf-Schneidverfahren benötigten Komponenten. Beispielsweise werden zuerst eine Pumpe (nicht dargestellt), das Sperrelement 5 sowie die Stromquelle 3 angesteuert, wodurch eine Versorgung des Brenners 7 mit der Flüssigkeit 9 über die Versorgungsleitung 8 sowie die Versorgung mit elektrischer Energie eingeleitet wird. Anschließend aktiviert die Steuervorrichtung 4 den Kühlkreislauf 12, sodass eine Kühlung des Brenners 7 ermöglicht wird. Selbstverständlich kann die Versorgung des Brenners 7 mit der Flüssigkeit 9 auch die Kühlung des Brenners 7 gewährleisten, da ja erst im Brenner 7 die Flüssigkeit 9 auf die für einen Schneidprozess erforderliche Temperatur erhitzt wird. Demnach könnte der Kühlkreislauf 12, welcher den Strömungswächter 13, den Flüssigkeitsbehälter 14 und die Kühlleitungen 15, 16 umfasst, entfallen. Durch die Versorgung des Brenners 7 mit der Flüssigkeit 9 und mit elektrischer Energie wird nunmehr im Brenner 7 die Flüssigkeit 9 mit einer entsprechend hohen Temperatur in ein Gas 20, insbesondere in ein Plasma, umgewandelt. Mit dem aus dem Brenner 7 ausströmenden Gas 20 kann ein Schneidprozess an einem Werkstück 21 durchgeführt werden. Dabei erfolgt die Umwandlung der Flüssigkeit 9 in das Gas 20 zumindest mit Hilfe einer Heizeinrichtung 22, welche bevorzugt durch ein entsprechendes Heizelement gebildet ist, und einen Verdampfer 23, welche bevorzugt im Brenner 7 integriert sind.

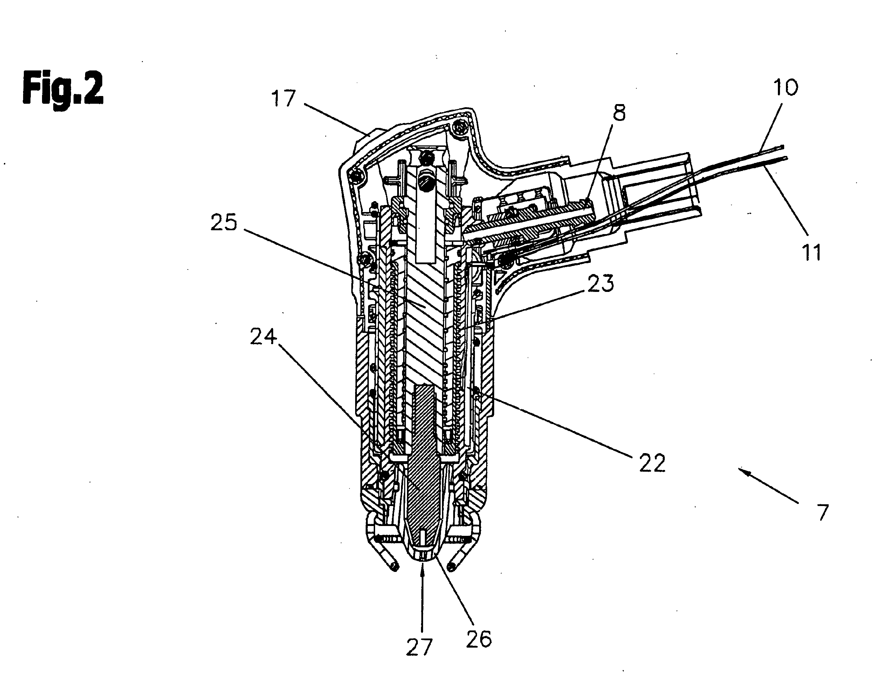

Für einen Schneidprozess an einem Werkstück 21 mit dem Brenner 7, welcher detailliert in Fig. 2 dargestellt ist, ist zusätzlich ein Lichtbogen 33 erforderlich. Der Lichtbogen 33 wird von der Steuervorrichtung 4 bzw. durch Betätigen des Tasters 19 gezündet und brennt zwischen einer Kathode 24, welche mit einer Kolbenstange 25 verbunden und so im Brenner 7 integriert und bevorzugt mit dem negativen Pol der Stromquelle 3 verbunden ist, und einer Anode, welche durch eine Düse 26 gebildet wird und mit dem positiven Pol der Stromquelle 3 verbunden ist. Nähert sich der Brenner 7 dem Werkstück 21, wird der positive Pol der Stromquelle 3 von der Düse 26 weggeschaltet, wodurch der Lichtbogen 33 durch das Gas 20 entsprechend durch eine Austrittsöffnung 27 in der Düse 26 nach außen getrieben wird und somit zwischen der Kathode 24 und dem Werkstück 21 brennt. Dazu wird das Werkstück 21 mit dem positiven Pol der Stromquelle 3 verbunden. Brennt also der Lichtbogen 33 zwischen Kathode 24 und Werkstück 21, wird von der Steuervorrichtung 4 der Strom entsprechend erhöht, und schließlich ein Plasmastrahl mit so hoher Energiedichte erzeugt, der zum Aufschmelzen und somit Schneiden von Werkstücken 21 verwendet werden kann.

Beim Trennen eines Werkstücks 21 mit Hilfe eines Wasserdampfplasmabrenners 7 sind einige Komponenten, insbesondere die Kathode 24 und die Düse 26, sehr hohen Temperaturen und einem hohen Strom ausgesetzt und somit einem hohen Verschleiß unterworfen. Die Qualität eines Schneidvorgangs hängt stark vom Verschleißgrad der Verschleißteile ab. Daher ist für die Qualitätskontrolle eine im Brenner 7 integrierte Verschleißerkennung vorteilhaft.

Erfindungsgemäß erfolgt die Verschleißerkennung über zumindest einen in der Kolbenstange 25 integrierten Temperatursensor 28. Der Temperatursensor 28 liefert die erfasste Temperatur bevorzugt an die Steuervorrichtung 4, welche anhand der Temperaturänderungen Rückschlüsse auf den Verschleiß der Verschleißteile ziehen kann. Durch eine derartige Verschleißerkennung kann auch der Brenner 7 vor einer thermischen Überlastung bewahrt werden.

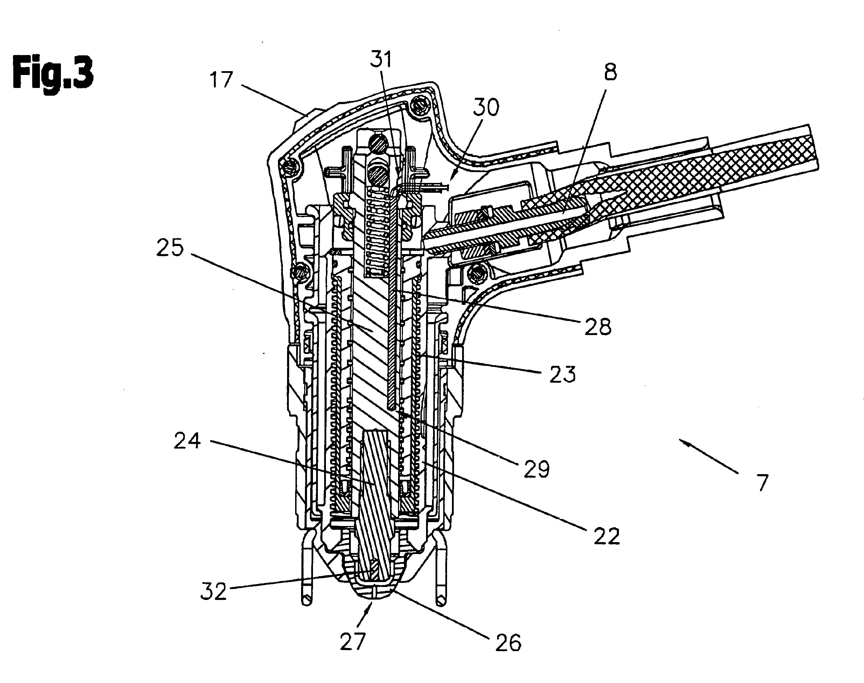

In Fig. 3 ist ein Brenner 7 mit dem erfindungsgemäßen Temperatursensor 28 in der Kolbenstange 25 dargestellt. Die Kolbenstange 25 und somit auch die Kathode 24 sind im Brenner 7 beweglich gelagert. Aus diesem Grund ist es erforderlich, dass der Temperatursensor 28 derart in der im Wesentlichen zylinderförmigen Kolbenstange 25 angeordnet wird, dass dieser die Bewegungen der Kolbenstange 25 und der damit verbundenen Kathode 24 nicht einschränkt. Deshalb weist der Temperatursensor 28 bevorzugt eine stabförmige Form auf. Bevorzugt ist der Temperatursensor 28 durch einen Halbleiterwiderstand, beispielsweise einen PTC (positvie temeperature coefficient)-Widerstand, wie einen PT100, gebildet. Ebenso ist es möglich, einen Widerstand mit negativem Temperaturkoeffizienten, einen so genannten NTC (negative temperature coefficient)-Widerstand zu wählen. Selbstverständlich kann der Temperatursensor 28 auch durch ein Thermoelement oder dgl. gebildet sein.

Zur Aufnahme des Temperatursensors 28 in der Kolbenstange 25 weist diese eine zur Form des Temperatursensors 28 korrespondierende Ausnehmung 29 bzw. Bohrung auf. Die Ausnehmung 29 ist im Randbereich der Kolbenstange 25 angeordnet, sodass der Platzbedarf für die für die Bewegung der Kolbenstange 25 erforderlichen Elemente (beispielsweise eine Feder) nicht eingeschränkt wird. Des Weiteren verläuft die Ausnehmung 29 bevorzugt parallel zur Längsachse der Kolbenstange 25 und im Wesentlichen bis zur Kathode 24. Bevorzugt ist dabei der Temperatursensor 28 in die Ausnehmung 29 eingeklemmt bzw. eingepresst und allenfalls eingeklebt.

Damit der Temperatursensor 28 die erfasste Temperatur an die Steuervorrichtung 4 übermitteln kann, weist der Temperatursensor 28 elektrische Anschlüsse 30 auf. Diese Anschlüsse 30 werden durch einen Durchlass 31 im Bereich der Befestigung der Kolbenstange 25, welcher sich gegenüber der Kathode 24 befindet, nach außen geführt und können mit der Steuervorrichtung 4 verbunden werden. Selbstverständlich stellt der Durchlass 31 keine Behinderung für die beweglich gelagerte Kolbenstange 25 dar.

Gemäß der Erfindung kann nun mit einem derartig angeordneten Temperatursensor 28 der Verschleiß der Kathode 24 und der Düse 26 erkannt werden.

Die Verschleißerkennung der Kathode 24 kann wie folgt durchgeführt werden.

Bei einem Schneidprozess brennt der dazu erforderliche Lichtbogen 33 zwischen der Kathode 24 und dem Werkstück 21. Bevorzugt bildet sich der Lichtbogen 33 in der Mitte der Kontaktfläche der Kathode 24, wobei an dieser Stelle bevorzugt ein Stift bzw. Bolzen 32, beispielsweise aus Hafnium, in die Kathode 24 gepresst ist. Dies bewirkt durch die elektronenemittierenden Eigenschaften von Hafnium, oder beispielsweise auch Zirkonium oder dgl., dass der Lichtbogen 33 direkt am Bolzen 32 ansetzt. Dadurch ist ein stabiler Lichtbogen 33 für den Schneidprozess gewährleistet. Durch den fortlaufenden Betrieb des Brenners 7 bzw. des Wasserdampf-Schneidgerätes 1 wird allerdings der Bolzen 32 zunehmend verschlissen und durch den Lichtbogen 33 ein tieferer Einbrand im Bolzen 32 bewirkt und somit mehr Leistung bzw. Wärme in die Kathode 24 eingekoppelt. Da die Kathode 24 thermisch mit der Kolbenstange 25 verbunden ist, sprich mit dieser beispielsweise über eine Schraubverbindung verbunden ist, resultiert eine entsprechende Temperaturerhöhung in der Kolbenstange 25. Diese Temperaturerhöhung, beispielsweise von etwa 160°C auf etwa 180°C, wird über den Temperatursensor 28 und die Steuervorrichtung 4 erfasst. In der Steuervorrichtung 4 sind entsprechende Referenzdaten bzw. Referenzwerte für die Temperaturerhöhung hinterlegt, sodass aufgrund der Temperaturerhöhung ein Rückschluss auf den Verschleiß der Kathode 24 erfolgen kann. Da die vom Temperatursensor 28 erfasste Temperatur zumindest teilweise von der Anordnung des Temperatursensors 28 abhängt, können beispielsweise zwei oder mehr Temperatursensoren 28 in der Kolbenstange 25 angeordnet sein. Aus sämtlichen erfassten Temperaturwerten kann die Steuervorrichtung 4 beispielsweise einen Mittelwert bilden, wodurch ein exakter Rückschluss auf den Verschleiß der Kathode 24 erfolgen kann.

Die Referenzdaten in der Steuervorrichtung können beispielsweise auch beinhalten, in welchem Zeitraum in Abhängigkeit der eingestellten Stromstärke sich die Temperaturerhöhung einstellt. Erfolgt demnach eine rasche Temperaturerhöhung in relativ kurzer Zeit, so kommt dies einem starken Verschleiß der Kathode 24 gleich. Dies ist beispielsweise bei einer Temperaturerhöhung von 7-10 °C bei einer Schneiddauer von 60 min der Fall.

Ebenso kann in der Steuervorrichtung 4 eine Temperaturschwelle als Referenzwert hinterlegt sein, bei deren Überschreitung zum Schutz des Brenners 7 der Schneidvorgang abgebrochen und der Brenner 7 mittels der Flüssigkeit 9 gekühlt werden kann. Somit kann die Steuervorrichtung 4 entsprechende Maßnahmen setzen, um die Qualität des Schneidprozesses nicht zu gefährden sowie den Brenner 7 vor einer Überhitzung zu bewahren. Beispielsweise kann der Strom für den Schneidprozess gesenkt werden, eine entsprechende Verschleißanzeige auf der Eingabe- und/oder Anzeigevorrichtung 17 am Brenner 7 erfolgen, die dem Benutzer einen notwendigen Wechsel der Kathode 24 anzeigt, oder der Schneidprozess gestoppt werden.

Eine weitere Möglichkeit eine verschlissene Kathode 24 zu erkennen, besteht darin, den Temperaturanstieg der Kolbenstange 25 nach einem Schneidvorgang auszuwerten. Dies erfolgt erfindungsgemäß über dem Temperatursensor 28 in der Kolbenstange 25.

Während eines Schneidbetriebs herrscht ein Wärmegefälle von der Spitze der Kathode 24 bis zum gegenüberliegenden Ende der Kolbenstange 25. Dies stellt sich dadurch ein, da die Kathode 24 durch den Lichtbogen 33 erhitzt wird, wobei die Kolbenstange 25 durch die Flüssigkeit 9 gekühlt wird. Nach einem Schneidbetrieb wird demnach die Kathode 24 nicht mehr erhitzt und die Kolbenstange 25 nicht mehr gekühlt, wodurch das Wärmegefälle abflacht bzw. angeglichen wird. Die Temperatur der Kolbenstange 25 steigt somit nach einem Schneidvorgang durch die in der Kathode 24 gespeicherte Wärme. Dies kann durch einen Temperatursensor 28 erfasst und von der Steuervorrichtung 4 ausgewertet werden, wobei zusätzlich der Temperaturanstieg in Abhängigkeit der Zeit ausgewertet werden kann. Somit kann erfindungsgemäß ein Rückschluss auf den Verschleiß der Kathode 24 erfolgen.

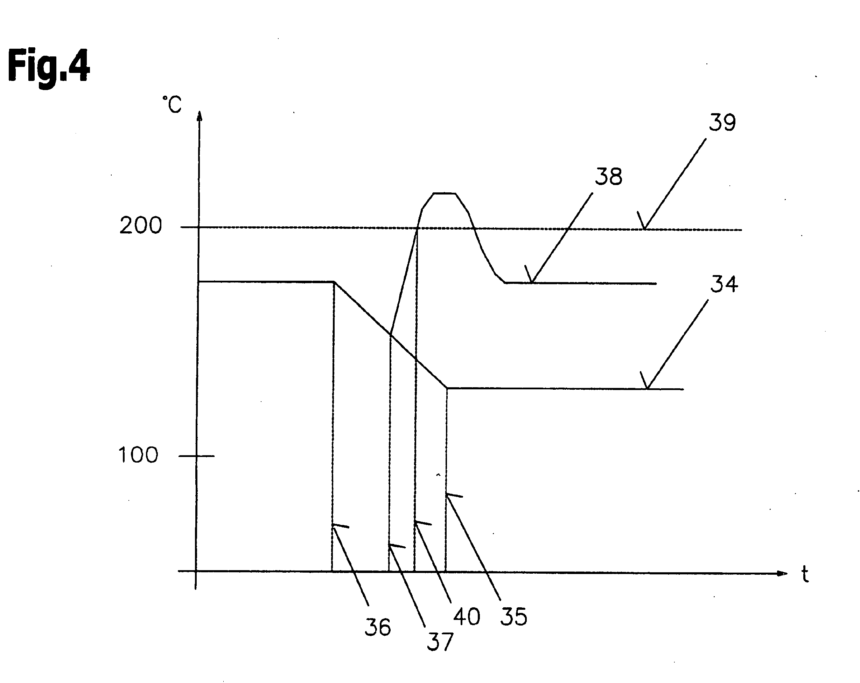

Insbesondere erfolgt eine derartige Auswertung nach kurzen Schneidprozessen, welche beispielsweise kürzer als zehn Sekunden sind. Erforderlich ist dies, da sich die Temperaturverhältnisse zwischen Verdampfer 23, Kathode 24 und Kolbenstange 25 erst nach einer gewissen Zeitdauer, beispielsweise nach ca. zehn Sekunden, so eingestellt haben, dass erst ab diesem Zeitpunkt eine effiziente Verschleißerkennung während eines Schneidbetriebs durchgeführt werden kann, wie bereits beschrieben. Aus dem zeitlichen Verlauf der Temperatur 34 an der Kolbenstange 25 gemäß Fig. 4 ist ersichtlich, dass erst ab dem Zeitpunkt 35 eine effiziente Verschleißerkennung durchgeführt werden kann. Bei einem kurzen Schneidprozess sind daher die Temperaturen im Wassersdampfplasmabrenner 7 allgemein höher, sodass die Referenzwerte der Verschleißerkennung während eines Schneidbetriebs innerhalb der etwa ersten zehn Sekunden eines Schneidvorgangs zu niedrig sind, um eine Verschleißerkennung durchzuführen bzw. würde die Steuervorrichtung 4 den Schneidprozess aufgrund von Überhitzung stoppen. Diese höheren Temperaturen sind darauf zurückzuführen, dass der Wasserdampfplasmabrenner 7 im Leerlauf bzw. Standby-Betrieb eine Temperatur von beispielsweise ca. 190°C aufweist. Wird nun der Taster 19 zum Zeitpunkt 36 gedrückt und der Schneidprozess gestartet, wird die Kolbenstange 25 gekühlt und die Kathode 24 durch den Lichtbogen erhitzt. Wenn nun der Schneidprozess nach beispielsweise ca. fünf Sekunden zum Zeitpunkt 37 gestoppt wird, weist die Kolbenstange 25 beispielsweise eine Temperatur von ca. 180°C auf und die Kathode 24 wurde auf 300°C erhitzt. Wie bereits bekannt, ist dabei die Erhitzung der Kathode 24 von deren Verschleiß abhängig und die in der Kathode 24 gespeicherte Wärme wird beim Abschalten in die Kolbenstange 25 eingekoppelt. Aufgrund der Temperaturdifferenz von ca. 120°C kann sich nun die Kolbenstange 25 zumindest kurzfristig auf bis über 200°C, wie aus dem Temperaturverlauf 38 ersichtlich, erwärmen, wobei sich anschließend wieder die Leerlauftemperatur von beispielsweise 190°C einstellt. Ein derartiges Verhalten der Temperatur ist als sogenannter "Temperaturüberschwinger" bekannt. Wird in diesem Temperaturbereich ein Schwellwert 39 definiert und in der Steuervorrichtung 4 hinterlegt, kann bei einer bzw. mehreren Überschreitung(en) dieses Schwellwertes 39 ein Verschleiß der Kathode 24 erkannt werden. Wird vom Temperatursensor 28 eine Überschreitung des Schwellwertes 39 gemessen - wie zum Beispiel zum Zeitpunkt 40 ersichtlich, ist dies ein Maß für eine zumindest im Anfangsstadium verschlissene Kathode 24. Daher sind bevorzugt mehrere Überschreitungen hintereinander, sprich bei jedem kurzen Schneidprozess eine Überschreitung, erforderlich, um die Verschleißanzeige zu aktivieren.

Bevorzugt wird zusätzlich zur Überwachung des Schwellwertes 39 noch die Steigung des Temperaturanstiegs, also die Veränderung der Temperatur in Abhängigkeit der Zeit, ausgewertet. Dazu wird beispielsweise mit dem Stoppen des Schneidprozesses ein Timer gestartet, welcher lediglich eine Auswirkung auf die Verschleißerkennung hat, wenn der Schwellwert 39 überschritten wird. Ist dies der Fall, wird die zum Erreichen des Schwellwertes 39 benötigte Zeit bei der Verschleißerkennung berücksichtigt. Eine sehr schnelle Überschreitung des Schwellwertes 39 wird als Anzeichen dafür gewertet, dass die Kathode 24 bereits stark verschlissen ist, während eine langsamere Überschreitung des Schwellwertes 39 als Anzeichen dafür gewertet wird, dass die Kathode 24 erst leicht verschlissen ist. Entsprechende Vergleichswerte können in der Steuervorrichtung 4 hinterlegt sein.

Der Schwellwert 39 und die Vergleichswerte können entsprechend an die Dimensionen der Kathode 24 bzw. der Kolbenstange 25 - d.h. der Leistungsklasse des Wasserdampfplasmabrenners 7 - angepasst sein.

Durch die Kombination der Verschleißerkennungen während eines Schneidvorganges und nach einem kurzen Schneidvorgang ist es daher stets möglich, dem Benutzer Auskunft über den Zustand der Kathode 24, bevorzugt über die Verschleißanzeige, zu geben.

Die Verschleißerkennung der Düse 26 kann wie folgt durchgeführt werden.

Mit zunehmender Anzahl von Schneidprozessen wird die Austrittsöffnung 27 der Düse 26 mehr und mehr verschlissen, indem der Durchmesser der Austrittsöffnung 27 erweitert bzw. ein Krater um die Austrittsöffnung 27 gebildet wird und die Kanallänge der Austrittsöffnung 27 verkürzt wird. Das bedeutet wiederum, dass sich die Menge des aus der Austrittsöffnung 27 austretenden Gases 20 entsprechend erhöht. Dies hat zur Folge, dass dem Brenner 7 entsprechend mehr Flüssigkeit 9 zugeführt wird, welche in der selben Zeit verdampft werden muss. Zum Verdampfen einer größeren Menge an Flüssigkeit 9 ist eine entsprechend höhere Heizleistung der Heizeinrichtung 22 erforderlich. Die Heizleistung wird erfindungsgemäß in Abhängigkeit der vom Temperatursensor 28 erfassten Temperatur geregelt werden, wie weiter unten noch näher beschrieben wird. Die Heizleistung ist direkt proportional zum Durchmesser der Austrittsöffnung 27 der Düse 26. Somit kann die Steuervorrichtung 4 aufgrund der Heizleistung Rückschlüsse auf den Verschleiß der Düse 26 ziehen und entsprechende Maßnahmen, wie zuvor beschrieben, setzen.

Erfindungsgemäß kann der in der Kolbenstange 25 integrierte Temperatursensor 28 auch zur Verbesserung des Regelsystems für die Heizleistung eingesetzt werden.

Wie aus dem Stand der Technik bekannt, dient die Flüssigkeit 9 einerseits dazu, die Kathode 24 bzw. die Kolbenstange 25 zu kühlen und so deren Standzeit zu verlängern, andererseits dient die Flüssigkeit 9 im dampfförmigen Zustand als Ausgangsmedium für den Schneidprozess. Die Flüssigkeit 9 umströmt zuerst den Kolbenstange 25 und wird anschließend im Verdampfer 23 in den dampfförmigen Zustand gebracht, indem die Heizeinrichtung 22 mit Strom versorgt wird.

Für einen qualitativ hochwertigen und stabilen Schneidprozess ist darauf zu achten, dass die Flüssigkeit 9 vollständig verdampft wird, ohne dass der Brenner 7 überhitzt wird. Mit dem erfindungsgemäßen Temperatursensor 28 in der Kolbenstange 25 kann die Heizleistung der Heizeinrichtung 22 exakt geregelt werden. Dies ist insbesondere beim Start eines Schneidvorganges mit einem völlig ausgekühlten Brenner 7 von Bedeutung, da hier die Gefahr einer Überhitzung des Brenners 7 oder einer Untertemperatur des Brenners 7 besonders groß ist. Für einen Schneidvorgang wird der Verdampfer 23 auf eine Temperatur von etwa 190°C aufgeheizt, sodass die Flüssigkeit 9 vollständig verdampfen kann. Hierbei ist vorausgesetzt, dass die Kolbenstange 25, welche durch den Lichtbogen 33 über die Kathode 24 erwärmt wird, die Flüssigkeit 9 bereits vorerwärmt, wie dies im Normalbetrieb der Fall ist. Beim Starten des Schneidbetriebs mit einem "kalten" Brenner 7 bzw. einer "kalten" Kolbenstange 25 muss keine Vorerwärmung stattfinden. Somit müsste der Verdampfer 23 auf eine wesentlich höhere Temperatur aufgeheizt werden, wodurch die thermische Belastung des Brenners 7 steigt.

Noch häufiger ist jedoch die Gefahr, dass der Brenner 7 bzw. der Verdampfer 23 nicht ausreichend erwärmt wurde, und eine Untertemperatur im Brenner 7 herrscht. Hierbei erhält der Verdampfer 23 eine zu kalte Flüssigkeit 9, da diese durch die kalte Kolbenstange 25 nicht vorerwärmt wurde. Oder anders ausgedrückt, der Verdampfer 23 hat eine zu geringe Temperatur, da dieser ja keine Information über die Temperatur der Kolbenstange 25, welche entscheidend für die Vorerwärmung der Flüssigkeit 9 ist, erhält. Somit hat der Verdampfer 23 eine zu geringe Temperatur, um die kalte Flüssigkeit 9 vollständig zu verdampfen. Dadurch sammelt sich Flüssigkeit 9 im Bereich der Austrittsöffnung 27 bzw. tritt aus dieser aus, was sich negativ auf die Haltbarkeit des Brenners 7 sowie der Verschleißteile auswirkt.

Demnach erfolgt die erfindungsgemäße Regelung, insbesondere für den Startvorgang des Schneidprozesses, derart, dass die vom Temperatursensor 28 erfasste Temperatur der Kolbenstange 25 an die Steuervorrichtung 4 übermittelt wird. Abhängig von dieser Temperatur kann die Steuervorrichtung 4 ermitteln, inwieweit die zugeführte Flüssigkeit 9 bereits durch die Temperatur der Kolbenstange 25 vorerwärmt wird. Daraus resultiert dann die erforderliche Heizleistung für die Heizeinrichtung 22, ohne den Brenner 7 durch die Gefahr einer Überhitzung zu gefährden. Bei einer hohen Temperatur der Kolbenstange 25 wird die Heizeinrichtung 22 also mit weniger Leistung versorgt. Dementsprechend wird die Heizeinrichtung 22 mit einer höheren Leistung versorgt, wenn die Temperatur der Kolbenstange 25 niedrig ist. Zusätzlich kann durch ein kurzfristiges, gezieltes Anheben des Schneidstroms (beispielsweise um 10A) mehr Wärme in die Kolbenstange 25 eingebracht werden, wodurch die Heizleistung geringer ist, und somit ein stabiler und unterbrechungsfreier Schneidprozess gewährleistet werden kann. Zusätzlich kann auch die Durchflussmenge oder der Druck (beispielsweise um 1 bar) der Flüssigkeit 9 kurzfristig reduziert werden, wodurch weniger Flüssigkeit 9 verdampft werden muss und somit eine geringere Heizleistung erforderlich ist.

Umgekehrt wird durch den Temperatursensor 28 auch erreicht, dass der Brenner 7 bzw. die Kolbenstange 25 stets die erforderliche Temperatur aufweisen, um die Flüssigkeit 9 für einen stabilen Schneidprozess entsprechend zu erwärmen. Demnach kann auch ein "kühler" Brenner 7 erkannt werden, was insbesondere für den Start eines Schneidprozesses von Bedeutung ist.

Wie bereits erwähnt, ist eine derartige Regelung insbesondere in den Startphasen der Schneidprozesse von Bedeutung, da in diesen Fällen eine schnelle Verdampfung der Flüssigkeit 9 erforderlich ist, um einen stabilen Schneidprozess zu gewährleisten. Dies kann mit der erfindungsgemäßen Regelung mit Hilfe des zumindest einen Temperatursensors 28 in jeder Prozessphase sichergestellt werden.

Damit also ein Schneidprozess in optimaler Qualität durchgeführt werden kann, wird mit dem erfindungsgemäßen Temperatursensor 28 stets die erforderliche vollständige Verdampfung der Flüssigkeit 9 gewährleistet. Ein im Wasserdampfplasma-Schneidgerät 1 integrierter Leistungsteil (nicht dargestellt) liefert den erforderlichen Strom zur Bildung des Lichtbogens 33. Damit der Lichtbogen 33 aus Sicherheitsgründen nur im zusammengebauten Zustand des Brenners 7 gezündet werden kann, kann im Brenner 7 eine sogenannte Schutzkappenüberwachung integriert sein. Dabei kann der Leistungsteil nur dann freigegeben bzw. nur dann der Schneidprozess gestartet werden, wenn zwischen Kathode 24 und Düse 26 ein Kurzschluss detektiert wird. Eine derartige Kurzschluss-Detektion kann mittels einer hochohmigen, niedervoltigen Spannungsquelle durchgeführt werden.

Selbstverständlich kann die erfindungsgemäße Verschleißerkennung sowie die Prozessregelung auch jeweils eine eigene Steuerung, welche beispielsweise in einem Mikrokontroller oder dgl. implementiert ist, aufweisen. Bevorzugt erfolgt die Steuerung bzw. Regelung jedoch zentral in der Steuervorrichtung 4. Da der Verschleiß, insbesondere der Kathode 24 und der Düse 26, von zusätzlichen Faktoren, wie Heizleistung, Stromstärke, Düsendurchmesser, Gasströmung und dgl. abhängt, können diese Faktoren von der Steuervorrichtung 4 zur Verschleißerkennung entsprechend berücksichtigt werden.

Dabei ist eine Kalibrierung von Vorteil. Insbesondere können Toleranzgrenzen, beispielsweise des Temperatursensors 28, oder Interpolationen bei den Referenzwerten die Regelung in gewisser Weise stören. Deshalb erfolgt bevorzugt eine Kalibrierung des Temperatursensors 28, beispielsweise durch Kalibrierwiderstände, durch welche der Einfluss bestimmter Störfaktoren in die Regelung ausgeschaltet oder reduziert werden kann und eine exakte Regelung der Heizleistung des Brenners 7 sichergestellt werden kann.

## Patentansprüche

1. Wasserdampfplasmabrenner (7) zum Schneiden eines Werkstücks (21), mit einer Zuleitung (8) für eine Flüssigkeit (9), einer Heizeinrichtung (22) und einem Verdampfer (23) zur Bildung eines Gases (20) aus der Flüssigkeit (9), einer lösbar mit einer beweglich gelagerten Kolbenstange (25) verbundenen Kathode (24), und einer Düse (26) mit einer Austrittsöffnung (27) für das Gas (20), **dadurch gekennzeichnet, dass** in der Kolbenstange (25) zumindest ein Temperatursensor (28) angeordnet ist, wobei der zumindest eine Temperatursensor (28) mit einer Steuervorrichtung (4) verbindbar ist, sodass über die erfassten Temperaturwerte auf einen Verschleiß der Kathode (24) und der Düse (26) rückschließbar ist und die Regelung eines Wasserdampfplasma-Schneidprozesses beeinflussbar ist.

2. Wasserdampfplasmabrenner (7) nach Anspruch 1, **dadurch gekennzeichnet, dass** an einer dem Werkstück (21) zugewandten Kontaktfläche der Kathode (24) ein Bolzen (32), vorzugsweise aus Hafnium, angeordnet ist.

3. Wasserdampfplasmabrenner (7) nach Anspruch 1 oder 2, **dadurch gekennzeichnet, dass** der Temperatursensor (28) mit einer Anzeige (17) zur Darstellung des Verschleißes der Verschleißteile, insbesondere der Kathode (24) und Düse (26), verbunden ist.

## Claims

1. A water-vapor plasma torch (7) for cutting a workpiece (21), comprising a feed line (8) for a liquid (9), a heating device (22), and an evaporator (23) for forming a gas (20) from the liquid (9), a cathode (24) detachably connected to a movably mounted piston rod (25), and a nozzle (26) with an outlet opening (27) for the gas (20), **characterized in that** at least one temperature sensor (28) is arranged within the piston rod (25), said at least one temperature sensor (28) being connectible to a control unit (4) so that wear of the cathode (24) and the nozzle (26) can be concluded from the temperature values detected, and that the control of a water-vapor plasma cutting process is influenceable.

2. The water-vapor plasma torch (7) according to claim 1, **characterized in that** a bolt (32), preferably made of hafnium, is arranged on a contact surface of the cathode (24) facing the workpiece (21).

3. The water-vapor plasma torch (7) according to claim 1 or 2, **characterized in that** the temperature sensor (28) is connected to a display (17) for displaying the wear of the wearing parts, in particular of the cathode (24) and the nozzle (26).

## Revendications

1. Torche à plasma de vapeur d'eau (7) pour la découpe d'une pièce (21), avec une conduite d'alimentation (8) pour un liquide (9), un dispositif de chauffage (22) et un évaporateur (23) pour la formation d'un gaz (20) à partir du liquide (9), une cathode (24) reliée de manière amovible avec une tige de piston (25) logée de manière mobile et une buse (26) avec une ouverture de sortie (27) pour le gaz (20), **caractérisée en ce que**, dans la tige de piston (25) est agencée au moins un capteur de température (28), l'au moins un capteur de température (28) pouvant être relié à un dispositif de commande (4), de façon à ce que les valeurs de température mesurées permettent de déduire une usure de la cathode (24) et de la buse (26) et permettent d'influer sur la régulation d'un processus de découpe par plasma de vapeur d'eau.

2. Torche à plasma de vapeur d'eau (7) selon la revendication 1, **caractérisée en ce que**, au niveau d'une surface de contact de la cathode (24), orientée vers la pièce (21), est agencée une tige (32), de préférence en hafnium.

3. Torche à plasma de vapeur d'eau (7) selon la revendication 1 ou 2, **caractérisée en ce que** le capteur de température (28) est relié à un affichage (17) pour la description d'une usure des pièces d'usure, plus particulièrement de la cathode (24) et de la buse (26).
